Europäisches Patentamt

European Patent Office

Office européen des brevets

(19)

(11) **EP 1 700 932 A1**

(12) **EUROPEAN PATENT APPLICATION**

(43) Date of publication:
**13.09.2006 Bulletin 2006/37**

(51) Int Cl.:
***C23C 28/02*** *(2006.01)*

(21) Application number: **05005047.5**

(22) Date of filing: **08.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **SIEMENS AKTIENGESELLSCHAFT 80333 München (DE)**

(72) Inventors:
• **Krüger, Ursus, Dr.**
  **14089 Berlin (DE)**
• **Steinbach, Jan, Dr.**
  **13353 Berlin (DE)**

(54) **Layer system with diffusion inhibiting layer**

(57)    The lifespan of a layer system at high temperatures is determined by the diffusion of single elements between the substrate and the layers on the substrate.

A diffusion inhibiting layer (13) according to the invention with an adapted aluminum content ($Al_d$) which lies between the aluminum content ($Al_2$) of the substrate (4) and the aluminum content ($Al_1$) of the bonding or corrosion protective layer (7) prevents the diffusion of aluminum and raises therefore the lifespan of the layer system.

# FIG 1

EP 1 700 932 A1

**Description**

The invention concerns a layer system consisting of a substrate, a diffusion inhibiting layer, a bonding- or corrosion protective layer.

The lifespan of a layer system with a bonding or corrosion protective layer (MCrAlX) and a thermal barrier coating (TBC) in the hot gas part of gas turbines is limited basically by interdiffusion occurrences. On account of the different compositions of the base material or base metal and the bonding or corrosion protective layer a time-steered and temperature-steered concentration balance across phase interfaces occurs in particular for aluminum from the layer as well as for Ta, Ti, W, Mo, Nb and partial Re and Hf (in SX- or DS-alloys) from the base metal away.

Not only the corrosion protection effect leads to a lower aluminum concentration. It also comes to injurious phase precipitations which cause in particular delaminations in interfaces of the single layers of the system. In order to slow down the diffusion of elements of the base metal into the MCrAlX and of aluminum from the MCrAlX into the base metal as well as to the surface of the MCrAlX diffusion barriers of elements of the ordinals 72 to 78, mostly Pt, were brought in the interfaces of the layer systems to install less diffusion-transparent positions of aluminides in the layer system. Indeed this lowered the diffusion activity of the above mentioned elements and allowed to expect a rise of the lifespan.

However, this led to problems with the stripping process after use, because as a result of local element formation around Pt-rich areas with higher solution potential the underlying areas are strongly attacked even deep down in the base material. Just with modern, more thin-walled components which should get over several reworkings a wall thickness loss is not to be tolerated caused by an aggressive stripping process.
This disadvantage during that stripping process does not offset the raised lifespan of the layer.

The inhibition of diffusion occurrences in the MCrAlX layer or between MCrAlX and basic material is also realized by the development and the application of very diffusion-sluggish MCrAlX compositions of base metal or combinations. On this occasion, additions of high-melting elements are also used. Inhibiting layers in the interface to the base metal or to the TBC should limit the diffusion activity. However they are a cost factor for the layer system, because they cause an additional procedure step with relatively expensive materials. To reach a sufficient continuity of these layers, they are mostly made relatively thick.

Hence, the task of the invention is to indicate a layer system with a diffusion inhibiting layer which works properly, does not cause problems during stripping in a refurbishment process and can be produced at justifiable cost and technological effort.

The task is solved by a layer system with a diffusion inhibiting layer according to claim 1.
In the dependent claims further advantageous measures are listed which can be combined in advantageous manner arbitrarily with each other.

Figure 1    shows schematically a layer construction of a layer system,
Figure 2    shows a listing of chemical compositions of superalloys of a substrate of a layer system,
Figure 3    shows a turbine blade or vane,
Figure 4    shows a combustion chamber and
Figure 5    shows a gas turbine.

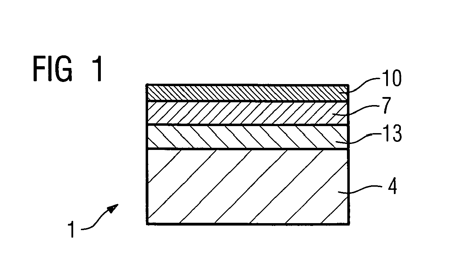

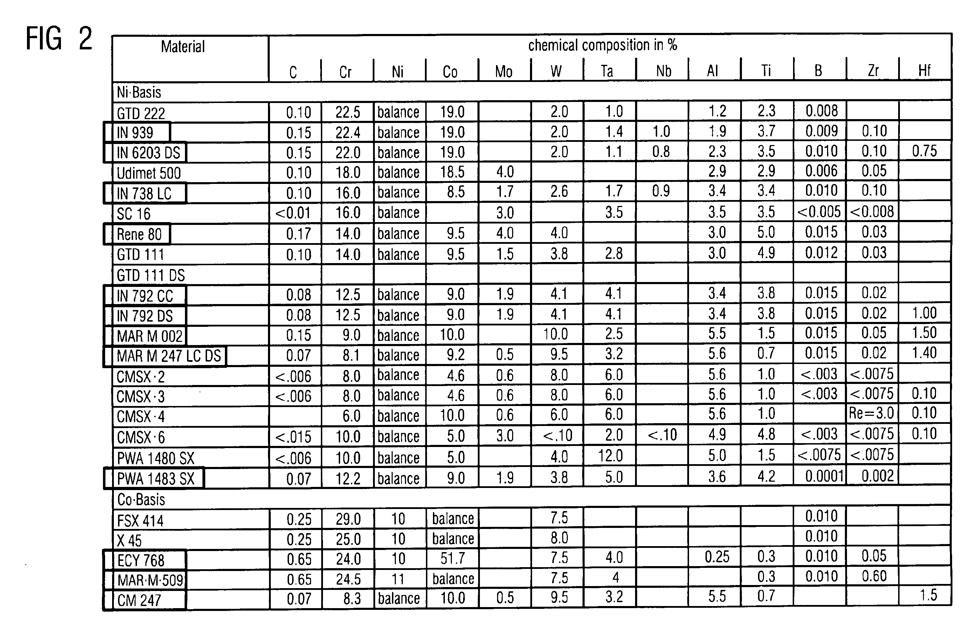

Figure 1 shows schematically the layer construction of a layer system 1 according to the invention. The layer system 1 has a substrate 4 which is in particular made of a superalloy based on iron, nickel and/or cobalt. Examples of such compositions are listed in the table of figure 2.

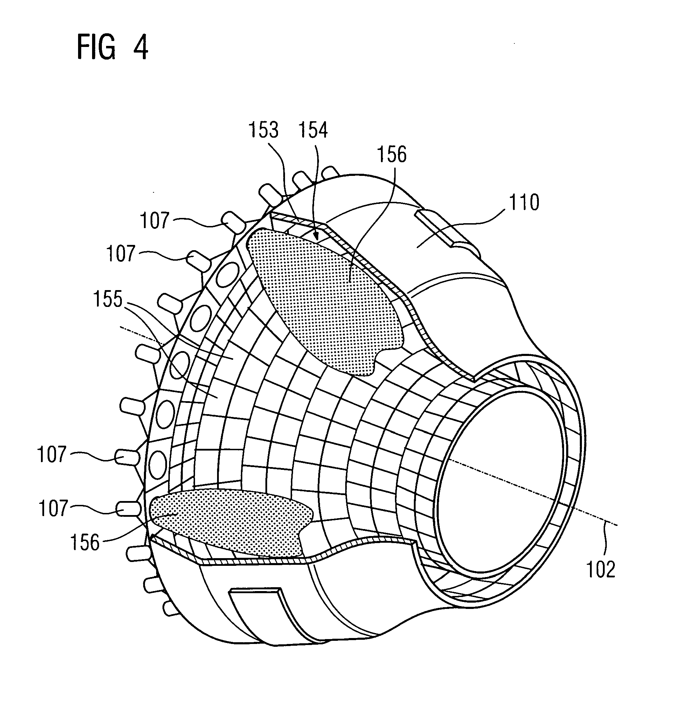

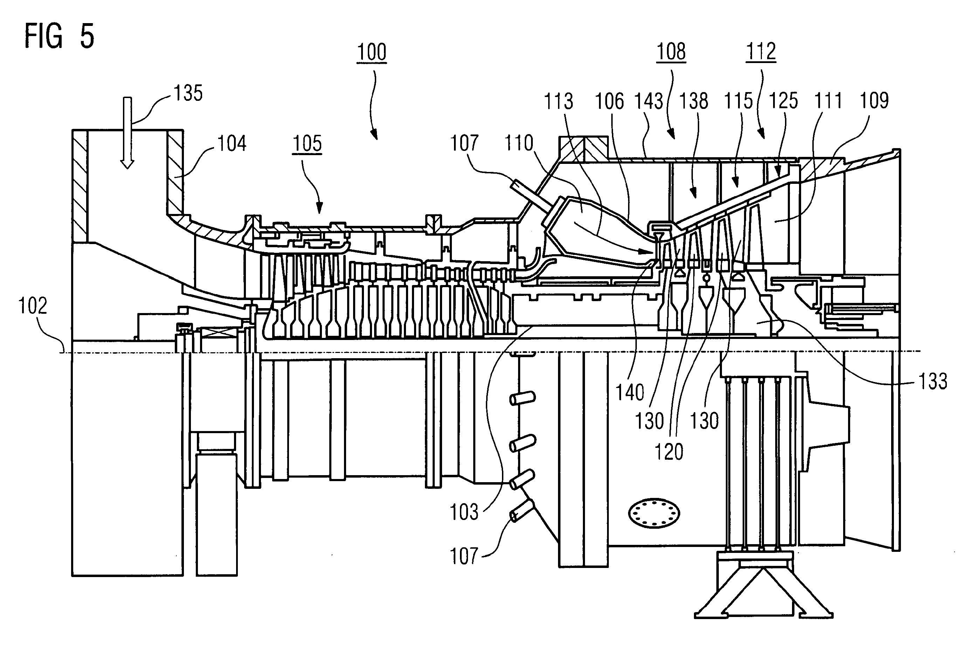

The layer system 1 can be an anew made or a refurbished component of a turbine, e.g. of a steam or gas turbine 100 (Fig. 5), and is in particular a turbine blade or vane 120, 130, a heat shield element 155 (Fig. 4) or a casing 138 (Fig. 5) .

The substrate 4 has a certain first aluminum content Al1. According to the state of the art a bonding or corrosion protective layer 7, in particular of the type MCrAlX is applied to the substrate 4.
This bonding or corrosion protective layer 7 has a second aluminum content $Al_2$ which differs from the first aluminum content Al1 of the substrate 4 and is higher in particular. Often, but not necessarily, an outer thermal barrier coating 10 is applied to the bonding or corrosion protective layer 7.

According to the invention between the substrate 4 and the bonding or corrosion layer 7 a diffusion inhibiting layer 13 is applied which has a similar composition like the substrate 4, but the aluminum content $Al_d$ of the diffusion inhibiting layer 13 was such changed that the aluminum content $Al_d$ lies between the first aluminum content $Al_1$ of the substrate 4 and the second aluminum content $Al_2$ of the bonding layer 7. Similar means that most of the elements of the substrate 4 or in particular all elements of the substrate 4 are also present in the diffusion inhibiting layer 13.
The elements with small amounts in particular < 1wt%, e.g. C, B, Zr, Hf may not be present in the diffusion inhibiting layer 13. The diffusion inhibiting layer 13 can also contain all elements of the substrate 4.

The second aluminum content $Al_2$ of the bonding or protective layer 7 and the exemplary lower first aluminum content $Al_1$ of the substrate 4 result in a difference

$$\Delta = |Al_2 - Al_1|$$

of the aluminum content.

The aluminum content $Al_d$ of the diffusion inhibiting layer 13 is raised by 10% to 90%, 10% to 80%, 20% to 90%, 10% to 70%, 20% to 80%, 30% to 90%, 10% to 50%, 20% to 60%, 30% to 70%, 40% to 80%, 50% to 90%, 10% to 40%, 20% to 50%, 30% to 60%, 40% to 70%, 50% to 80%, 60% to 90% or 40% to 60% of this difference $\Delta$ compared to the first aluminum content $Al_1$ of the substrate 4 or amount preferably to 60%, 50% or more preferably 40% or 30% of this difference $\Delta$.

Expressed in a formula: $Al_d = Al_1 + (0.1 \text{ to } 0.9)*\Delta$ or generally: $Al_d = Al_1 + a*\Delta$ ; $(0.1 \leq a \leq 0.9)$ .

In particular the substrate 4 contains at least the elements Ni, Cr, Co and Al.

In a preferred form the substrate 4 contains the elements Ni, Cr, Co and Al.

The amount of $Al_d$ is fixed according to the formula given above.

The amount $Me_i$ of the alloy elements of the diffusion inhibiting layer 13 (i.e. the amounts of Ni, Cr and Co) are calculated according to the formula

$$Me_i \text{ (layer 13)} = Me_i(substrate) \times \left(1 - \frac{a*\left|Al_2 - Al_1\right|}{\sum_{i \neq Al} Me_i(substrate)}\right),$$

i = Ni, Cr, Co, even if the diffusion inhibiting layer 13 contains more elements than Ni, Cr, Co and Al, because these elements have high amounts in the alloy of the substrate 4 or of the diffusion inhibiting layer 13.

The new alloy of the diffusion inhibiting layer 13 can have even more elements $M_{ei}$ than Ni, Cr, Co and Al.

In this case the amount of $Al_d$ is again fixed according to the formula given above.

A higher amount of $Al_d$ can be compensated by a reduction of the amount of all elements $Me_i$ of the alloy ($Al_2$, $Al_1$ in wt%):

$$Me_i \text{ (layer 13)} = Me_i(substrate) \times \left(1 - \frac{a*\left|Al_2 - Al_1\right|}{\sum_{i \neq Al} Me_i(substrate)}\right),$$

$Me_i$ = Ni, Cr, Co,..., not Al.

Furthermore the substrate 4 can contain at least one of the elements W, Ta, Ti, Nb, Mo, C, B, Zr, Hf and/or C.

A higher amount of $Al_d$ can be compensated by a reduction of the amount of all elements $Me_i$ of the alloy ($Al_2$, $Al_1$ in wt%), but the amount of at least one of the elements $Me_c$ , c = W, Ta, Ti, C, B, Zr, Hf and/or C can be kept at the same level as in the substrate 4 for the diffusion inhibiting layer 13:

$$Me_i \text{ (layer 13)} = Me_i(substrate) \times \left(1 - \frac{a*\left|Al_2 - Al_1\right|}{\sum_{i \neq Al, \neq c} Me_i(substrate)}\right),$$

i = Ni, Cr, Co,... not Al and not $Me_c$ which is at least one of the elements c = W, Ta, Ti, C, B, Zr, Hf and/or C.

Another possibility to compensate the higher aluminium content $Al_d$ is to reduce only the concentration of Ti, Ta, Mo, W and Nb compared to the compositions of the substrate 4, that means i = Ti, Ta, Mo, W, Nb and i ≠ Al. The base elements of the substrate 4 like Ni, Co, Cr are kept constant or c = Ni, Co, Cr, ... for the composition of the diffusion inhibiting layer 13.

An exemplary calculation with an arbitrary alloy of the substrate to explain the use of the formula:

Ni = 40%
Cr = 30%

Co = 20%, and therefore $\sum_{i=Ni,Cr,Co} Me_i(substrate) = 90\,\%$

$Al_1$ = 10%.

The aluminium content of the layer 7 is e.g. $Al_2$ = 30% ($\Delta$ = |30-10 | = 20%) and a is chosen to a= 0.5. The content of $Al_d$ is therefore raised to 20%.
The composition of the diffusion inhibiting layer 13 is therefore:

$$\text{Ni} \;=\; 40\% \;*\; \left(1-0{,}5*\frac{20}{90}\right) \;\approx 35{,}5 \;\%$$

$$\text{Cr} \;=\; 30\% \;*\; \left(1-0{,}5*\frac{20}{90}\right) \;\approx 26{,}6 \;\%$$

$$\text{Co} \;=\; 20\% \;*\; \left(1-0{,}5*\frac{20}{90}\right) \;\approx 17{,}7 \;\%$$

and therefore ( $\sum_{i=Ni,Cr,Co} Me_i(layer\,13) = 80\%$ ) + 20% (Al) = 100%

Another example to explain the use of the formula with an arbitrary alloy of the substrate is:

Ni = 35%

Cr = 30%

Co = 20%

$Me_c$ = Ta = 5%, which is kept constant and therefore $\sum_{i \neq Al,Ta} Me_i(substrate)$ = 85 %

All = 10%.
The aluminium content of the layer 7 is e.g. $Al_2$ = 30% ($\Delta$ = |30-10 | = 20%) and a is chosen to a= 0.5. The content of $Al_d$ is therefore raised to 20%.
The composition of the diffusion inhibiting layer 13 is therefore:

$$\text{Ni} \;=\; 35\% \;*\; \left(1-0{,}5*\frac{20}{85}\right) \;\approx 30{,}9\%$$

$$Cr = 30\% \; * \; \left(1 - 0,5 * \frac{20}{85}\right) \approx 26,5\%$$

$$Co = 20\% \; * \; \left(1 - 0,5 * \frac{20}{85}\right) \approx 17,7\%$$

and therefore $\sum\limits_{i=Ni,Cr,Co} Me_i (75\%) + Ta (=5\%) + Al_d (=20\%) = 100\%$.

Examples of a MCrAlX alloy (in wt%) are listed below:

I. 20-22% of chrome,
10,5-11,5% of aluminum,
0,3-0,5% of yttrium,
1,5-2,5% of rhenium,
11-13% of cobalt and
balance nickel.

II. 27-29% of chrome,
7-8% of aluminum,
0,5-0,7% of yttrium,
0,3-0,7% of silicon,
29-31% of nickel and
balance cobalt.

III. 16-18% of chrome,
12-13% of aluminum,
0,5-0,7% of yttrium,
0,3-0,5% of silicon,
21-23% of cobalt and
balance nickel.

IV. 16-18% of chrome,
9,5-11% of aluminum,
0,3-0,5% of yttrium,
1-1,8% of rhenium,
24-26% of cobalt,
balance nickel.

The alloy IN 738 has an aluminum content of 3,4%.
Therefore the aluminum content (in wt%) for a diffusion inhibiting layer 13 for a MCrAlX alloy of group (a = 0,3 to 0,7) can lie:

I: between 0,3*(11,00-3,4) + 3,4 and 0,7*(11,00-3,4) + 3.4 = 5,68 to 8,72
II: between 0,3*(7,50-3,4) + 3.4 and 0,7*(7,50-3,4) + 3.4 = 4,63 to 6,27
III: between 0,3*(12,50-3,4) + 3.4 and 0,7*(12,50-3,4) + 3.4 = 6,13 to 9,77
IV: between 0,3* (10,0 -3,4) + 3,4 and 0,7* (10,0 - 3,4) +3,4 = 5,38 to 8,02

Especially the alloy IN 939, IN 6203 DS, IN 738 LC, Rene 80, IN792 CC, IN 792 DS, MAR M 002, MAR M 247 LC DS, PWA 1483 SX, ECY 768, MAR M 509, CM 247 can be used and which are emphasized in Figure 2.
The diffusion inhibiting layer 13 can also contain platinum, or a thin (1 - 10μm) platinum layer can be situated between diffusion inhibiting layer 13 and layer 7. During initial heat treatment and/or in service this Pt-layer would be transferred into a PTAl-layer or zone (10...100μm) which is much more diffusion intransparent than the diffusion inhibiting layer 13 itself. That zone and the diffusion inhibiting layer due to Al-diffusion from the MCrAlY-coating into base metal direction. This results in a higher (electro-) chemical solubility in acidic etching processes and therefore the coating will be underwent by the etching medium and layerwise released from the substrate.

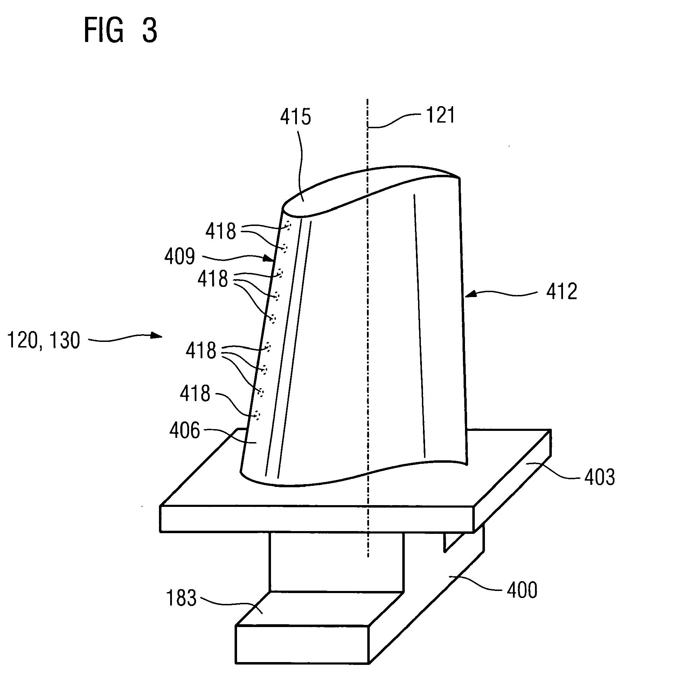

Figure 3 shows in a perspective view a blade 120 or vane 130 of a turbine which has a long axis 121.

The turbine can be a gas turbine of an airplane or of a power station for the production of electricity, a steam turbine or a compressor.

The blade 120 or vane, 130 shows along the axis 121 a connection area 400, a blade platform 403 adjoining in it as well as a blade sheet 406.

As a vane 130 the vane can show at her other end 415 another platform (not shown).

In the connection area 400 a blade foot 183 is formed which serves as connection of the blade 120, 130 in a disc (not shown) .

The blade foot 183 is formed, for instance, as a hammer head.

The blade 120, 130 shows for a medium, that flows around the blade sheet 406, a leading edge 409 and an leaving edge 412.

With customary vanes 120, 130 for instance massive metallic materials, in particular superalloys are used in all areas 400, 403, 406 of the vane.

Such superalloys are, for instance, known from the EP 1 204 776 B1, EP 1 306 454, EP 1 319 729 A1, WO 99/67435 or  WO 00/44949. These disclosures related to the chemical composition of the alloy is a part of this disclosure.

The vane 120, 130 can be manufactured by a casting procedure or by means of directed solidification.

Work pieces with single crystalline structure are used as components for machines which are exposed to high mechanical, thermal and/or chemical loads.

The manufacturing of such single crystalline work pieces occurs, e.g., through directed solidifying from the melt. Besides, dendritic crystals are aligned along the thermal gradient and form either a columnar grain structure (columnar, i.e. grains who are aligned about the whole length of the work piece and are called here, to the general usage, directed solidified) or an single crystalline structure, i.e. the whole work piece exists of one crystal. In these procedures one must avoid the occurrence of the globulistic (polycrystalline) solidification, because by undirected growth necessarily transverse and longitudinale grain boundary which lower the good qualities of the single crystalline component.

Also the vanes 120, 130 can have coatings against corrosion or oxidation (MCrAlX; M is at least an element of the group Iron (Fe), cobalt (Co), nickel (Ni), X is an active element and stands for yttrium (Y) and/or silicon and/or at least an element of the rare earth and/or hafnium (Hf)). Such alloys are known from the EP 0 486 489 B1, EP 0 786 017 B1,  EP 0 412 397 B1 or EP 1 306 454 A1 which shall be a part of this disclosure related to of the chemical composition of the alloy.

Between substrate 4 and the MCrAlX the inventive diffusion inhibiting layer 13 exists.

On the MCrAlX a thermal barrier coating can be applied and consists, for instance of $ZrO_2$, $Y_2O_4$-$ZrO_2$, i.e. is not, partially or entirely stabilized by yttrium oxide and/or calcium oxide and/or magnesium oxide. By suitable coating procedures as for example electron beam evaporation (EB-PVD) columnar grains are generated in the thermal barrier coating.

Reworking (Refurbishment) means that components 120, 130 must be stripped after her application if necessary from protective coatings (e.g. by sand blacting). Then the removal of the corrosion and/or oxidation layers or products is performed. If necessary cracks are repaired in the components 120, 130. Then the components 120, 130 are recoated and a renewed application of the component 120, 130 is possible.

The vane 120, 130 can be made as an hollow or massive component.

If the vane 120, 130 should be cooled, it is hollow and shows if necessary also film cooling holes 418.

Figure 4 shows a combustion chamber 110 of a gas turbine 100. The combustion chamber 110 is configured, for example, as what is known as an annular combustion chamber, in which a multiplicity of burners 102, arranged around the turbine shaft 103 in the circumferential direction, open out into a common combustion chamber space. For this purpose, the combustion chamber 110 as a whole is configured as an annular structure positioned around the turbine shaft 103.

To achieve a relatively high efficiency, the combustion chamber 110 is designed for a relatively high temperature of the working medium M of approximately 1000°C to 1600°C. To allow a relatively long operating time to be achieved even under these operating parameters which are unfavorable for the materials, the combustion chamber wall 153 is provided, on its side facing the working medium M, with an inner lining formed from heat shield elements 155. On the working medium side, each heat shield element 155 is equipped with a particularly heat-resistant protective layer and/or the diffusion inhibiting layer 13 or is made from material which is able to withstand high temperatures. Moreover, on account of the high temperatures in the interior of the combustion chamber 110, a cooling system is provided for the heat shield elements 155 and/or for the holding elements thereof.

Figure 5 shows a longitudinal part-section through a gas turbine 100.

In its interior, the gas turbine 100 has a rotor 103 which is mounted rotatably about an axis of rotation 102 and is also referred to as the turbine rotor. An intake housing 104, a compressor 105, a for example torus-like combustion chamber 110, in particular an annular combustion chamber 106, having a plurality of coaxially arranged burners 107, a turbine 108 and the exhaust-gas housing 109 follow one another along the rotor 103. The annular combustion chamber 106 is in communication with an, for example, annular hot-gas duct 111, where, by way of example, four turbine stages 112, connected in series, form the turbine 108. Each turbine stage 112 is formed from two bladed rings. As seen in the direction of flow of a working medium 113, a row 125 formed from rotor blades 120 follows a row 115 of guide vanes 130 in the hot-gas duct 111.

The guide vanes 130 are secured to the stator 143, whereas the rotor blades 120 belonging to a row 125 are arranged on the rotor 103 by means of a turbine wheel 133. A generator or a machine (not shown) is coupled to the rotor 103.

While the gas turbine 100 is operating, air 135 is sucked in through the intake housing 104 and compressed by the compressor 105. The compressed air provided at the turbine-side end of the compressor 105 is passed to the burners 107, where it is mixed with a fuel. The mixture is then burnt in the combustion chamber 110, so as to form the working medium 113. From there, the working medium 113 flows along the hot-gas duct 111, past the guide vanes 130 and the rotor blades 120. The working medium 113 expands at the rotor blades 120, transferring its momentum, so that the rotor blades 120 drive the rotor 103 and the latter drives the machine coupled to it.

The components which are exposed to the hot working medium 113 are subject to thermal loads while the gas turbine 100 is operating. The guide vanes 130 and rotor blades 120 of the first turbine stage 112, as seen in the direction of flow of the working medium 113, as well as the heat shield elements (bricks) lining the annular combustion chamber 106, are subjected to the highest thermal loads. To be able to withstand the prevailing temperatures, these components are cooled by means of a coolant. It is also possible for the blades and vanes 120, 130 to have coatings protecting against corrosion (MCrAlX; M = Fe, Co, Ni, X = Y, rare earths) and heat (thermal barrier coating, for example $ZrO_2$, $Y_2O_4$-$ZrO_2$).

The guide vane 130 has a guide vane root (not shown here) facing the inner housing 138 of the turbine 108 and a guide vane head on the opposite side from the guide vane root. The guide vane head faces the rotor 103 and is fixed to a securing ring 140 of the stator 143.

**Claims**

**1.** Layer system (1),
at least consisting of
a substrate (4) with a first aluminum content ($Al_1$),
a bonding or corrosion protective layer (7) with a second aluminum content ($Al_2$) on the substrate (4),
in particular of an alloy of the type MCrAlX,
and in particular with an outer thermal barrier coating (10) on the bonding or corrosion protective layer (7)
wherein between the substrate (4) and the bonding or corrosion protective layer (7) a diffusion inhibiting layer (13) is arranged,
**characterized in,**
**that** the composition of the diffusion inhibiting layer (13) contains most of the elements,
in particular all the elements
of the composition of the substrate (4) and
**that** an aluminum content ($Al_d$)
of the diffusion inhibiting layer (13) lies between the first ($Al_1$) and the second ($Al_2$) aluminum content.

**2.** Layer system according to claim 1,
**characterized in,**
**that** a difference of the aluminum content $\Delta=|Al_2-Al_1|$ is given between the second aluminum content ($Al_2$) of the bonding or corrosion protective layer (7) and the first aluminum content (All) of the substrate (4) and
**that** the aluminum content ($Al_d$) of the diffusion inhibiting layer (13) amounts to 10% to 90%,
in particular 30% to 70%,
of this difference ($\Delta$) added to the first aluminum content ($Al_1$):

$$Al_d = Al_1 + a*\Delta = Al_1 + (0,1 \text{ to } 0,9) *\Delta.$$

**3.** Layer system according to claim 1 or 2,
**characterized in, that**

the composition of the bonding or corrosion protective layer (7) is selected from the group I, II, III, IV (in wt%) :

I 20-22% of chrome, 10,5-11,5% of aluminum, 0,3-0,5% of yttrium, 1,5-2,5% of rhenium, 11-13% of cobalt and balance nickel,
II 27-29% of chrome, 7-8% of aluminum, 0,5-0,7% of yttrium, 0,3-0,7% of silicon, 29-31% of nickel and balance cobalt,
III 16-18% of chrome, 12-13% of aluminum, 0,5-0,7% of yttrium, 0,3-0,5% of silicon, 21-23% of cobalt and balance nickel or
IV 16-18% of chrome, 9,5-11% of aluminum, 0,3-0,5% of yttrium, 1-1,8% of rhenium, 24-26% of cobalt and balance nickel.

4. Layer system according to claim 1 or 2,
   **characterized in, that**
   the substrate (4) is a nickel, cobalt and/or iron based superalloy.

5. Layer system according to any of the claims 1, 2, or 4,
   **characterized in, that**
   the alloy of the substrate (4) contains at least nickel (Ni), cobalt (Co), chromium (Cr) and aluminum (Al).

6. Layer system according to any of the claim 1, 2, 4 or 5,
   **characterized in, that**
   the composition of the substrate (4) is selected from the group of alloys IN738, IN939 or Rene80.

7. Layer system according to claim 4 or 5,
   **characterized in, that**
   the alloy of the substrate (4) further contains at least one of the elements titanium (Ti), tantalum (Ta), tungsten (W), niob (Nb) and/or molybdenum (Mo).

8. Layer system according to any of the claim 2, 4, 5, 6 or 7,
   **characterized in,**
   **that** the aluminum content ($Al_d$) of the diffusion inhibiting layer (13) is given and
   **that** the amounts of the other alloy elements ($Me_i$ (layer 13)) of the diffusion inhibiting layer (13) are calculated by

$$\text{Me}_i \text{ (layer (13))} = Me_i(substrate(4)) \times \left( 1 - \frac{a * \left| Al_2 - Al_1 \right|}{\sum\limits_{i \neq Al} Me_i(substrate)} \right),$$

wherein $Me_i$ is the content of at least one of the elements i = Ni, Cr, Co, W, Ta, Ti, Nb, Mo, C, B, Zr and/or Hf.

9. Layer system according to claim 8,
   **characterized in, that**
   a higher amount of aluminum ($Al_d$) in the diffusion inhibiting layer (13) is only compensated by at least one of the elements nickel (Ni), cobalt (Co) and/or chromium (Cr).

10. Layer system according to claim 8 or 9,
    **characterized in, that**
    a higher amount of aluminum ($Al_d$) in the diffusion inhibiting layer (13) is compensated only by nickel (Ni), cobalt (Co) and chromium (Cr).

11. Layer system according to claim 2, 4, 5, 6 or 7,
    **characterized in,**
    **that** the aluminum content ($Al_d$) of the diffusion inhibiting layer (13) is given,
    **that** the amount of at least one alloy element $Me_c$ of the elements of the substrate (4) is kept on the same level as in the diffusion inhibiting layer (13) and
    **that** the amounts of the other alloy elements ($Me_i$) of the diffusion inhibiting layer (13) are calculated:

$$\text{Me}_i \; (\text{layer} \; (13)) \;=\; Me_i(substrate(4)) \;\times\; \left( 1 - \frac{a*\left|Al_2 - Al_1\right|}{\sum\limits_{i \neq Al, \neq c} Me_i(substrate)} \right),$$

wherein $Me_i$ is at least one of the elements i = Ni, Cr, Co, W, Ta, Ti, Nb, Mo, C, B, Zr and/or Hf.

**12.** Layer system according to claim 11,
**characterized in, that**
the amount of at least one element $Me_c$ of the group W, Ta, Ti, C, B, Zr, Hf in the diffusion inhibiting layer (13) is kept on the same level compared to the amounts in the substrate (4) .

**13.** Layer system according to claims 8 to 12,
**characterized in, that**
the composition of the diffusion inhibiting layer (13) is similar to the composition of the substrate (4).

**14.** Layer system according to claim 13,
**characterized in, that**
the composition of the diffusion inhibiting layer (13) contains all elements of the substrate (4).

**15.** Layer system according claim 8 to 14,
**characterized in, that**
at least one, in particular all elements of the composition of the substrate with small amounts,
in particular < 1wt% are not present in the diffusion inhibiting layer (13),
in particular C, B, Zr and/or Hf.

**16.** Layer system according to one or more of the claims 1, to 15,
**characterized in, that**
the layer system (1) is an anew made or a refurbished component of a turbine,
in particular of a steam or gas turbine (100),
in particular a turbine blade or vane (120, 130), a heat shield element (155) or a casing (138).

FIG 1

FIG 2

| Material | chemical composition in % | | | | | | | | | | | | |
|---|---|---|---|---|---|---|---|---|---|---|---|---|---|
| | C | Cr | Ni | Co | Mo | W | Ta | Nb | Al | Ti | B | Zr | Hf |
| Ni·Basis | | | | | | | | | | | | | |
| GTD 222 | 0.10 | 22.5 | balance | 19.0 | | 2.0 | 1.0 | | 1.2 | 2.3 | 0.008 | | |
| IN 939 | 0.15 | 22.4 | balance | 19.0 | | 2.0 | 1.4 | 1.0 | 1.9 | 3.7 | 0.009 | 0.10 | |
| IN 6203 DS | 0.15 | 22.0 | balance | 19.0 | | 2.0 | 1.1 | 0.8 | 2.3 | 3.5 | 0.010 | 0.10 | 0.75 |
| Udimet 500 | 0.10 | 18.0 | balance | 18.5 | 4.0 | | | | 2.9 | 2.9 | 0.006 | 0.05 | |
| IN 738 LC | 0.10 | 16.0 | balance | 8.5 | 1.7 | 2.6 | 1.7 | 0.9 | 3.4 | 3.4 | 0.010 | 0.10 | |
| SC 16 | <0.01 | 16.0 | balance | | 3.0 | | 3.5 | | 3.5 | 3.5 | <0.005 | <0.008 | |
| Rene 80 | 0.17 | 14.0 | balance | 9.5 | 4.0 | 4.0 | | | 3.0 | 5.0 | 0.015 | 0.03 | |
| GTD 111 | 0.10 | 14.0 | balance | 9.5 | 1.5 | 3.8 | 2.8 | | 3.0 | 4.9 | 0.012 | 0.03 | |
| GTD 111 DS | | | | | | | | | | | | | |
| IN 792 CC | 0.08 | 12.5 | balance | 9.0 | 1.9 | 4.1 | 4.1 | | 3.4 | 3.8 | 0.015 | 0.02 | |
| IN 792 DS | 0.08 | 12.5 | balance | 9.0 | 1.9 | 4.1 | 4.1 | | 3.4 | 3.8 | 0.015 | 0.02 | 1.00 |
| MAR M 002 | 0.15 | 9.0 | balance | 10.0 | | 10.0 | 2.5 | | 5.5 | 1.5 | 0.015 | 0.05 | 1.50 |
| MAR M 247 LC DS | 0.07 | 8.1 | balance | 9.2 | 0.5 | 9.5 | 3.2 | | 5.6 | 0.7 | 0.015 | 0.02 | 1.40 |
| CMSX·2 | <.006 | 8.0 | balance | 4.6 | 0.6 | 8.0 | 6.0 | | 5.6 | 1.0 | <.003 | <.0075 | |
| CMSX·3 | <.006 | 8.0 | balance | 4.6 | 0.6 | 8.0 | 6.0 | | 5.6 | 1.0 | <.003 | <.0075 | 0.10 |
| CMSX·4 | | 6.0 | balance | 10.0 | 0.6 | 6.0 | 6.0 | | 5.6 | 1.0 | | Re=3.0 | 0.10 |
| CMSX·6 | <.015 | 10.0 | balance | 5.0 | 3.0 | <.10 | 2.0 | <.10 | 4.9 | 4.8 | <.003 | <.0075 | 0.10 |
| PWA 1480 SX | <.006 | 10.0 | balance | 5.0 | | 4.0 | 12.0 | | 5.0 | 1.5 | <.0075 | <.0075 | |
| PWA 1483 SX | 0.07 | 12.2 | balance | 9.0 | 1.9 | 3.8 | 5.0 | | 3.6 | 4.2 | 0.0001 | 0.002 | |
| Co·Basis | | | | | | | | | | | | | |
| FSX 414 | 0.25 | 29.0 | 10 | balance | | 7.5 | | | | | 0.010 | | |
| X 45 | 0.25 | 25.0 | 10 | balance | | 8.0 | | | | | 0.010 | | |
| ECY 768 | 0.65 | 24.0 | 10 | 51.7 | | 7.5 | 4.0 | | 0.25 | 0.3 | 0.010 | 0.05 | |
| MAR·M·509 | 0.65 | 24.5 | 11 | balance | | 7.5 | 4 | | | 0.3 | 0.010 | 0.60 | |
| CM 247 | 0.07 | 8.3 | balance | 10.0 | 0.5 | 9.5 | 3.2 | | 5.5 | 0.7 | | | 1.5 |

EP 1 700 932 A1

FIG 3

FIG 4

FIG 5

**European Patent Office**

## EUROPEAN SEARCH REPORT

Application Number

EP 05 00 5047

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 921 209 A (ROLLS-ROYCE PLC) 9 June 1999 (1999-06-09) * column 2, paragraph 7-9 * * column 3, paragraph 13-21 * * claims 1-4,17-19,21-33 * | 1-16 | C23C28/02 |
| X | US 6 306 524 B1 (SPITSBERG IRENE T ET AL) 23 October 2001 (2001-10-23) * column 4, line 15 - column 6, line 30 * *claims* * column 7, line 10 - column 8, line 41 * | 1-16 | |
| X | US 4 897 315 A (GUPTA ET AL) 30 January 1990 (1990-01-30) * column 4, line 3 - line 25 * * column 4, line 58 - column 5, line 42 * * column 7, line 7 - column 8, line 63 * * claims 1-5 * | 1-16 | |
| X | US 4 123 594 A (CHANG ET AL) 31 October 1978 (1978-10-31) * the whole document * | 1-16 | TECHNICAL FIELDS SEARCHED (Int.Cl.7) |
| P,X | YU Z ET AL: "NiAl bond coats made by a directed vapor deposition approach" MATERIALS SCIENCE AND ENGINEERING A: STRUCTURAL MATERIALS: PROPERTIES, MICROSTRUCTURE & PROCESSING, LAUSANNE, CH, vol. 394, no. 1-2, 15 March 2005 (2005-03-15), pages 43-52, XP004784378 ISSN: 0921-5093 * page 46 - page 47 * * figures 6,11 * | 1,2 | C23C |

-/--

The present search report has been drawn up for all claims

| Place of search | Date of completion of the search | Examiner |
|---|---|---|
| The Hague | 4 August 2005 | Ovejero, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

## EUROPEAN SEARCH REPORT

Application Number

EP 05 00 5047

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/044634 A1 (KELLY THOMAS JOSEPH ET AL) 6 March 2003 (2003-03-06) <br> * page 1, paragraphs 3-5,8-10 * <br> * page 2, paragraph 22 - page 3, paragraphs 24,25 * <br> * claims 1-10 * <br> ----- | 1 | |
| A | EP 1 378 587 A (GENERAL ELECTRIC COMPANY) 7 January 2004 (2004-01-07) <br> * column 2, paragraph 10 - column 3, paragraph 15 * <br> * column 5, paragraphs 21,23 * <br> * column 6, paragraphs 25,26 * <br> * claims 1-10 * <br> ----- | 1-16 | |

TECHNICAL FIELDS SEARCHED (Int.Cl.7)

The present search report has been drawn up for all claims

| Place of search | Date of completion of the search | Examiner |
|---|---|---|
| The Hague | 4 August 2005 | Ovejero, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    & : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 05 00 5047

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2005

| Patent document cited in search report | | Publication date | Patent family member(s) | | Publication date |
|---|---|---|---|---|---|
| EP 0921209 | A | 09-06-1999 | DE | 69810431 D1 | 06-02-2003 |
| | | | EP | 0921209 A2 | 09-06-1999 |
| | | | US | 6299986 B1 | 09-10-2001 |
| US 6306524 | B1 | 23-10-2001 | NONE | | |
| US 4897315 | A | 30-01-1990 | US | 4910092 A | 20-03-1990 |
| US 4123594 | A | 31-10-1978 | DE | 2826910 A1 | 05-04-1979 |
| | | | FR | 2404054 A1 | 20-04-1979 |
| | | | GB | 1554846 A | 31-10-1979 |
| | | | IT | 1097101 B | 26-08-1985 |
| | | | JP | 1322827 C | 27-06-1986 |
| | | | JP | 54047837 A | 14-04-1979 |
| | | | JP | 60048590 B | 28-10-1985 |
| | | | SG | 3783 G | 20-07-1984 |
| US 2003044634 | A1 | 06-03-2003 | NONE | | |
| EP 1378587 | A | 07-01-2004 | US | 2004001965 A1 | 01-01-2004 |
| | | | CN | 1477230 A | 25-02-2004 |
| | | | EP | 1378587 A1 | 07-01-2004 |
| | | | JP | 2004043968 A | 12-02-2004 |
| | | | US | 2004157081 A1 | 12-08-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1204776 B1
- EP 1306454 A
- EP 1319729 A1
- WO 9967435 A
- WO 0044949 A
- EP 0486489 B1
- EP 0786017 B1
- EP 0412397 B1
- EP 1306454 A1